# EUROPEAN PATENT APPLICATION

(11) **EP 4 393 762 A1**
(43) Date of publication of application: **03.07.2024**
(21) Application number: 22909732.4
(22) Date of filing: 06.12.2022
(51) Int. Cl.: B60L 53/24, H02J 7/00, B60L 53/22, H02J 7/02

(54) **VEHICLE, AND ENERGY CONVERSION DEVICE AND DISCHARGING METHOD THEREFOR**

(30) Priority: 24.12.2021 CN 202111604578
(71) Applicant: BYD Company Limited, Shenzhen, Guangdong 518118 (CN)
(72) Inventor: XUE, Penghui, Shenzhen, Guangdong 518118 (CN); WANG, Junlong, Shenzhen, Guangdong 518118 (CN); ZHENG, Leping, Shenzhen, Guangdong 518118 (CN); WANG, Liang, Shenzhen, Guangdong 518118 (CN); CHEN, Mingwen, Shenzhen, Guangdong 518118 (CN)
(74) Representative: Arnold & Siedsma
(86) International application number: PCT/CN2022/136930
(87) International publication number: WO 2023/116417

(57) **Abstract**

A vehicle is provided, including an energy conversion apparatus and a discharging method thereof. The energy conversion apparatus includes: a first inductor, a first end of the first inductor being connected to a first output end of a battery module; a second inductor, a first end of the second inductor being connected to the first end of the first inductor; a second switch, connected between the first end of the second inductor and a first end of a charging and discharging port; a first two-way H-bridge, one end of the first two-way H-bridge being connected to a second output end of the battery module and a second end of the charging and discharging port, the first two-way H-bridge including a first bridge arm and a second bridge arm that are connected in parallel, a second end of the first inductor being connected to the first bridge arm, and a second end of the second inductor being connected to the second bridge arm; and a third switch, connected between the first end of the first inductor and the first end of the charging and discharging port.

## Description

### CROSS-REFERENCE TO RELATED APPLICATIONS

The present disclosure claims priority to Chinese Patent Application No. 202111604578.4, filed on December 24, 2021 and entitled "VEHICLE, ENERGY CONVERSION APPARATUS, AND DISCHARGING METHOD THEREOF", which is incorporated herein by reference in its entirety.

### FIELD

The present disclosure relates to the field of electric vehicle technologies, and in particular, to a vehicle, an energy conversion apparatus, and a discharging method thereof.

### BACKGROUND

At this stage, limited by a new energy vehicle device, a V2V (Vehicle-to-Vehicle) charging technology cannot perform high-power charging, resulting in low charging efficiency. In addition, addition of a separate boost-buck circuit or a control box leads to high costs.

### SUMMARY

An objective of the present disclosure is to provide a vehicle, an energy conversion apparatus, and a discharging method thereof, to resolve problems that the vehicle-to-vehicle charging technology in the related art cannot implement high-power charging, resulting in low charging efficiency, and that addition of a separate boost-buck circuit or a control box leads to high costs.

The present disclosure is implemented in this way. According to a first aspect of the present disclosure, an energy conversion apparatus is provided, including a first inductor, a second inductor, a second switch, a first two-way H-bridge, and a third switch.

A first end of the first inductor is connected to a first output end of a battery module.

A first end of the second inductor is connected to the first end of the first inductor.

The second switch is connected between the first end of the second inductor and a first end of a charging and discharging port.

One end of the first two-way H-bridge is connected to a second output end of the battery module and a second end of the charging and discharging port. The first two-way H-bridge includes a first bridge arm and a second bridge arm that are connected in parallel. A second end of the first inductor is connected to the first bridge arm, and a second end of the second inductor is connected to the second bridge arm.

The third switch is connected between the first end of the first inductor and the first end of the charging and discharging port.

According to a second aspect of the present disclosure, a discharging method of an energy conversion apparatus is provided. Based on the energy conversion apparatus according to the first aspect, when the charging and discharging port of the energy conversion apparatus is connected to a to-be-charged vehicle, the discharging method includes:
obtaining a voltage of the battery module and a voltage of the to-be-charged vehicle, and selecting a discharging manner according to the voltage of the battery module and the voltage of the to-be-charged vehicle, where the discharging manner includes boost discharging, buck discharging, and equal discharging; and
controlling the second switch, the third switch, the first bridge arm, and the second bridge arm to cause the battery module to output a direct current, and cause the battery module to discharge to the to-be-charged vehicle in the selected discharging manner.

According to a third aspect of the present disclosure, a vehicle is provided. The vehicle further includes the energy conversion apparatus, the battery module, and the charging and discharging port according to the first aspect. One end of the battery module and one end of the energy conversion apparatus are jointly connected to one end of the charging and discharging port, and an other end of the battery module and an other end of the energy conversion apparatus are jointly connected to an other end of the charging and discharging port.

The present disclosure provides a vehicle, an energy conversion apparatus, and a discharging method thereof. The first inductor, the second inductor, and the first two-way H-bridge are arranged, to form different charging and discharging circuits with the to-be-charged vehicle. When it is detected that the voltage of the battery module is not higher than the voltage of the to-be-charged vehicle, the first inductor is used to boost a voltage of the battery module, and then the to-be-charged vehicle is charged. When it is detected that the voltage of the battery module is higher than the voltage of the to-be-charged vehicle, the battery module is used to charge the second inductor, and then the to-be-charged vehicle is charged by the second inductor. In this way, the to-be-charged vehicle can be charged by the battery module whether the voltage of the battery module is higher or lower, compatibility and adaptability are strong, and addition of an external boost or buck circuit is not required. This reduces costs of an external circuit, implements charging and discharging between vehicles of different voltage platforms, and can implement high-power charging without an external high-voltage inverter conversion apparatus or a control box on the cable.

### BRIEF DESCRIPTION OF THE DRAWINGS

To describe the technical solutions in embodiments of the present disclosure more clearly, the following briefly introduces the accompanying drawings required for describing the embodiments or the related art. Apparently, the accompanying drawings in the following description show merely some embodiments of the present disclosure, and a person of ordinary skill in the art may still derive other drawings from these accompanying drawings without creative efforts.
FIG. 1 is a schematic structural diagram of an energy conversion apparatus according to Embodiment 1 of the present disclosure;
FIG. 2 is another schematic structural diagram of an energy conversion apparatus according to Embodiment 1 of the present disclosure;
FIG. 3 is another schematic structural diagram of an energy conversion apparatus according to Embodiment 1 of the present disclosure;
FIG. 4 is a circuit diagram of an energy conversion apparatus according to Embodiment 1 of the present disclosure;
FIG. 5 is a flowchart of a control method of an energy conversion apparatus according to Embodiment 2 of the present disclosure;
FIG. 6 is a circuit diagram of an energy conversion apparatus being connected to a to-be-charged vehicle according to Embodiment 2 of the present disclosure;
FIG. 7 is a current path diagram of an energy conversion apparatus being connected to a to-be-charged vehicle according to Embodiment 2 of the present disclosure;
FIG. 8 is another current path diagram of an energy conversion apparatus being connected to a to-be-charged vehicle according to Embodiment 2 of the present disclosure;
FIG. 9 is another current path diagram of an energy conversion apparatus being connected to a to-be-charged vehicle according to Embodiment 2 of the present disclosure; and
FIG. 10 is a schematic diagram of a vehicle according to an embodiment of the present disclosure.

### DETAILED DESCRIPTION

To make the objective, technical solutions, and advantages of the present disclosure clearer and more comprehensible, the following further describes the present disclosure in detail with reference to the accompanying drawings and embodiments. It should be understood that the specific embodiments described herein are used only for explaining the present disclosure instead of limiting the present disclosure.

To describe the technical solutions of the present disclosure, specific embodiments are used for description below.

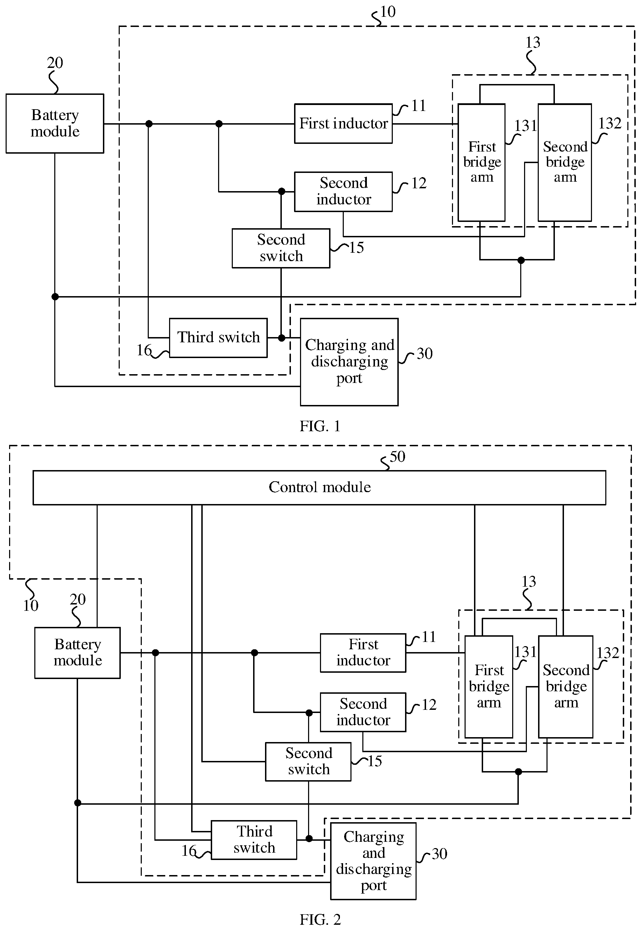

Embodiment 1 of the present disclosure provides an energy conversion apparatus 10, as shown in FIG. 1, including a first inductor 11, a first switch 14, a second inductor 12, a second switch 15, a first two-way H-bridge 13, and a third switch 16.

A first end of the first inductor 11 is connected to a first output end of a battery module 20 and a first end of a charging and discharging port 30.

A first end of the first switch 14 is connected to the first output end of the battery module 20.

A first end of the second inductor 12 is connected to a second end of the first switch 14.

A second switch 15 is connected between the first end of the second inductor 12 and the first end of a charging and discharging port 30.

One end of the first two-way H-bridge 13 is connected to a second output end of the battery module 20 and a second end of the charging and discharging port 30. The first two-way H-bridge 13 includes a first bridge arm 131 and a second bridge arm 132 that are connected in parallel. A second end of the first inductor 11 is connected to the first bridge arm 131, and a second end of the second inductor 12 is connected to the second bridge arm 132.

A third switch 16 is connected between the first end of the first inductor 11 and the first end of the charging and discharging port 30.

The battery module 20 is configured to provide power to a vehicle. The charging and discharging port 30 is configured for an external power supply device to charge the battery module 20 through the charging and discharging port 30, or for the battery module 20 to discharge to an external electrical device (for example, a vehicle) through the charging and discharging port 30. The first inductor 11 is configured to store electric energy and release electric energy, and after the first inductor 11 stores electric energy, when discharging with the battery module 20 together, boost discharging can be implemented. The second inductor 12 is configured to store electric energy and release electric energy, and when the second inductor 12 discharges alone, buck discharging can be implemented. The first two-way H-bridge 13 includes the first bridge arm and the second bridge arm, and each phase bridge arm includes two power switches. The power switch may be a transistor, an IGBT, a MOS transistor, or another type of device. The power switch can implement two-way conduction, and a control end of the power switch is connected to a control end of each power switch. The second switch 15 is connected between the second inductor 12 and the charging and discharging port 30, and can control the second inductor 12 to output or stop outputting energy. The third switch 16 is connected between the battery module 20 and the charging and discharging port 30, configured to control the battery module 20 to discharge externally or charge the battery module 20. The second switch is used to control output energy of the second inductor 12, and the third switch is used to control the battery module 20 to output or stop outputting energy, thereby achieving precise control of the energy conversion apparatus 10. By controlling the second switch 15, the third switch 16, and four power switches, the battery module 20, the first inductor 11, the second inductor 12, the first bridge arm 131, the second bridge arm, and the external electrical device are configured to form different charging and discharging circuits, to perform boost discharging, equal discharging, or buck discharging on the external electrical device. A control module may include a vehicle controller, a control circuit of a motor controller, and a BMS battery management system circuit, which are connected through a CAN line. Different modules in the control module control, according to obtained information about the external electrical device, on and off of the power switches in the first two-way H-bridge 13, to implement conduction of different current circuits.

As an implementation, as shown in FIG. 2, the energy conversion apparatus 10 includes a control module 50. The control module 50 is connected to the battery module 20, a control end of the first bridge arm 131, a control end of the second bridge arm 132, a control end of the first switch 14, a control end of the second switch 15, a control end of the third switch 16, and a control end of a fourth switch 17. When the charging and discharging port 30 is connected to a to-be-charged vehicle, the control module 50 is configured to:
obtain a voltage of the battery module 20 and a voltage of the to-be-charged vehicle, and select a discharging manner according to the voltage of the battery module 20 and the voltage of the to-be-charged vehicle, where the discharging manner includes boost discharging, buck discharging, and equal discharging; and
control the second switch 15, the third switch 16, the first bridge arm 131, and the second bridge arm 132 to cause the battery module 20 to output a direct current, and cause the battery module 20 to discharge to the to-be-charged vehicle in the selected discharging manner.

When the control module 50 detects that the to-be-charged vehicle is connected to the charging and discharging port 30, the control module compares the voltage of the battery module 20 with the voltage of the to-be-charged vehicle, and selects, according to a comparison result, different discharging manners to discharge to the to-be-charged vehicle. When the voltage of the battery module 20 is not higher than the voltage of the to-be-charged vehicle, a direct current boost discharging manner may be used to discharge to the to-be-charged vehicle. Because the first inductor 11 can store electric energy, power switches in the first bridge arm 131 and the second bridge arm 132 may be controlled to be switched on, the first inductor 11 is charged through the battery module 20, and the battery module 20 and the first inductor 11 are used to discharge to the to-be-charged vehicle. In a discharging process, because the first inductor 11 also outputs electric energy, boost discharging is implemented. The first bridge arm 131 and the second bridge arm 132 are controlled to cause the charging process and the discharging process to alternate, which implements the boost discharging to the to-be-charged vehicle. When the control module detects that the voltage of the battery module 20 is higher than the voltage of the to-be-charged vehicle, a direct current buck discharging manner may be used to discharge to the to-be-charged vehicle. Because the second inductor 12 can store electric energy, power switches in the first bridge arm 131 and the second bridge arm may be controlled to be switched on, the second inductor 12 is charged through the battery module 20, and the second inductor 12 is used to discharge to the to-be-charged vehicle. In a discharging process, because only the second inductor 12 also outputs electric energy, buck discharging is implemented. The first bridge arm 131 and the second bridge arm 132 are controlled to cause the charging process and the discharging process to alternate, which implements the buck discharging to the to-be-charged vehicle.

In Embodiment 1 of the present disclosure, the first inductor 11, the second inductor 12, the second switch 15, the third switch 16, and the first two-way H-bridge 13 are arranged, to form different charging and discharging circuits with the to-be-charged vehicle. When it is detected that the voltage of the battery module 20 is not higher than the voltage of the to-be-charged vehicle, the first inductor 11 is used to boost a voltage of the battery module, and then the to-be-charged vehicle is charged. When it is detected that the voltage of the battery module 20 is higher than the voltage of the to-be-charged vehicle, the battery module 20 is used to charge the second inductor 12, and then the to-be-charged vehicle is charged by the second inductor 12. In this way, the to-be-charged vehicle can be charged by the battery module 20 whether the voltage of the battery module 20 is higher or lower, compatibility and adaptability are strong, and addition of an external boost or buck circuit is not required. This reduces costs of an external circuit, implements charging and discharging between vehicles of different voltage platforms, and can implement high-power charging without an external high-voltage inverter conversion apparatus or a control box on the cable.

Further, as an implementation, the first bridge arm 131 includes a first power switch and a second power switch that are connected in series. The second end of the first inductor 11 is connected to a second end of the first power switch and a first end of the second power switch.

The second bridge arm 132 includes a third power switch and a fourth power switch that are connected in series. The second end of the second inductor 12 is connected to a second end of the third power switch and a first end of the fourth power switch.

A first end of the first power switch and a first end of the third power switch are jointly connected to form a first bus terminal of the first two-way H-bridge 13. A second end of the second power switch and a second end of the fourth power switch are jointly connected to form a second bus terminal of the first two-way H-bridge, and the second bus terminal is connected to the second output end of the battery module 20 and the second end of the charging and discharging port 30.

As an implementation, when the control module 50 performs boost discharging, the first switch 14 and the third switch 16 are in an off state, the second switch 15 and the fourth switch 17 are in an on state, the battery module 20, the first inductor 11, the second power switch, and the to-be-charged vehicle are configured to form a first energy storing circuit, and the battery module 20, the first inductor 11, the second power switch, the third power switch, the second inductor 12, the second switch 15, the to-be-charged vehicle, and the fourth switch 17 are configured to form a first discharging circuit.

The control module controls a bridge arm in the first power switch, the third power switch, and the fourth power switch to be in the off state, and controls a bridge arm in the second power switch to be switched on or switched off alternately, so that the first energy storing circuit and the first discharging circuit operate alternately.

As an implementation, when the control module 50 performs buck discharging, the first switch 14 and the third switch 16 are in the off state, the second switch 15 and the fourth switch 17 are in the on state, the battery module 20, the first inductor 11, the second power switch, the third power switch, the second inductor 12, the second switch 15, the to-be-charged vehicle, and the fourth switch 17 are configured to form a second energy storing circuit, and the second inductor 12, the second switch 15, the to-be-charged vehicle, the fourth switch 17, and the fourth power switch are configured to form a second discharging circuit.

The control module 50 controls the bridge arm in the first power switch, the second power switch, and the third power switch to be in the off state, and controls the bridge arm in the fourth power switch to be switched on and switched off alternately, so that the second energy storing circuit and the second discharging circuit operate alternately.

When the energy conversion apparatus 10 performs boost discharging, the control module 50 controls the first switch 14 and the third switch 16 to be in the off state, and the second switch 15 and the fourth switch 17 to be in the on state, and when the control module 50 controls the bridge arm in the first power switch and the fourth power switch to be switched off, controls the bridge arm in the third power switch to be switched on, and controls the bridge arm in the second power switch to be switched on, the battery module 20, the first inductor 11, the second power switch, and the to-be-charged vehicle are configured to form the first energy storing circuit, and the battery module 20 stores energy in the first inductor 11; and then when the control module 50 controls the bridge arm in the second power switch to be switched off, the battery module 20, the first inductor 11, the second power switch, the third power switch, the second inductor 12, the second switch 15, the to-be-charged vehicle, and the fourth switch 17 are configured to form a first discharging circuit, and the battery module 20 and the first inductor 11 discharge to the to-be-charged vehicle, controlling the second power switch to be switched on or off through a PWM signal, so that the energy conversion apparatus 10 performs boost discharging on the to-be-charged vehicle. When the energy conversion apparatus 10 performs buck discharging, the control module controls the third switch 16 to be in the off state, and the second switch 15 to be in the on state, and when the control module controls the first power switch, the second power switch, and the four power switch to be switched off, and controls the third power switch to be switched on, the battery module 20, the first inductor 11, the second power switch, the third power switch, the second inductor 12, the second switch 15, and the to-be-charged vehicle are configured to form the second energy storing circuit, and the battery module 20 stores energy in the second inductor 12; and then when the control module controls the third power switch to be switched off, the second inductor 12, the second switch 15, the to-be-charged vehicle, and the fourth power switch are configured to form the second discharging circuit, controlling the fourth power switch to be switched on and off through a PWM signal, so that the energy conversion apparatus 10 performs buck discharging on the to-be-charged vehicle.

As an implementation, when the control module 50 performs equal discharging, the third switch 16 is in the on state, the second switch 15 is in the off state, and the battery module 20, the third switch 16, and the to-be-charged vehicle are configured to form a third discharging circuit.

When the energy conversion apparatus performs equal discharging on the to-be-charged vehicle, two ends of batteries of two vehicles are directly connected, and the battery module 20 directly charges the battery of the to-be-charged vehicle.

Further, as an implementation, the energy conversion apparatus 10 further includes a first capacitor.

The first capacitor is connected between the first bus terminal and the second bus terminal.

The first two-way H-bridge 13 is connected to a motor controller, and the motor controller is connected to a motor.

When the energy conversion apparatus is in a drive state, the battery module 20, the first inductor 11, the second inductor 12, the first two-way H-bridge 13, the first capacitor, the motor controller, and the motor are configured as a part of a drive circuit.

When the energy conversion apparatus is in a discharging state, the battery module 20, the first inductor 11, the second inductor 12, the first two-way H-bridge 13, the second switch 15, the third switch 16, and the to-be-charged vehicle are configured as a part of a discharging circuit.

The first inductor 11, the second inductor 12, and the first two-way H-bridge 13 are multiplexed in the drive circuit and the discharging circuit.

The motor controller is a three-phase inverter. Two ends of the first capacitor are connected to the three-phase inverter, for storing electric energy to drive the motor through the three-phase inverter. The three-phase inverter includes a first power switch unit, a second power switch unit, a third power switch unit, a fourth power switch unit, a fifth power switch unit, and a sixth power switch unit. A control end of each power switch unit is connected to the control module. Input ends of the first power switch unit, the third power switch unit, and the fifth power switch unit are jointly connected to form a first end of the three-phase inverter. Output ends of the second power switch unit, the fourth power switch unit, and the sixth power switch unit are jointly connected to form a second end of the three-phase inverter. A first phase coil of the three-phase inverter is connected to an output end of the first power switch unit and an input end of the fourth power switch unit, a second phase coil of the three-phase inverter is connected to an output end of the third power switch unit and an input end of the sixth power switch unit, and a third phase coil is connected to an output end of the fifth power switch unit and an input end of the second power switch unit.

In this implementation, the first capacitor, the three-phase inverter, and a three-phase alternating motor are sequentially connected at two ends of the first two-way H-bridge 13, and the first inductor 11, the second inductor 12, and the first two-way H-bridge 13 are multiplexed, so that the battery module 20 drives the three-phase alternating motor through the three-phase inverter. That is, the battery module 20 can both perform charging and discharging and output power to drive the vehicle.

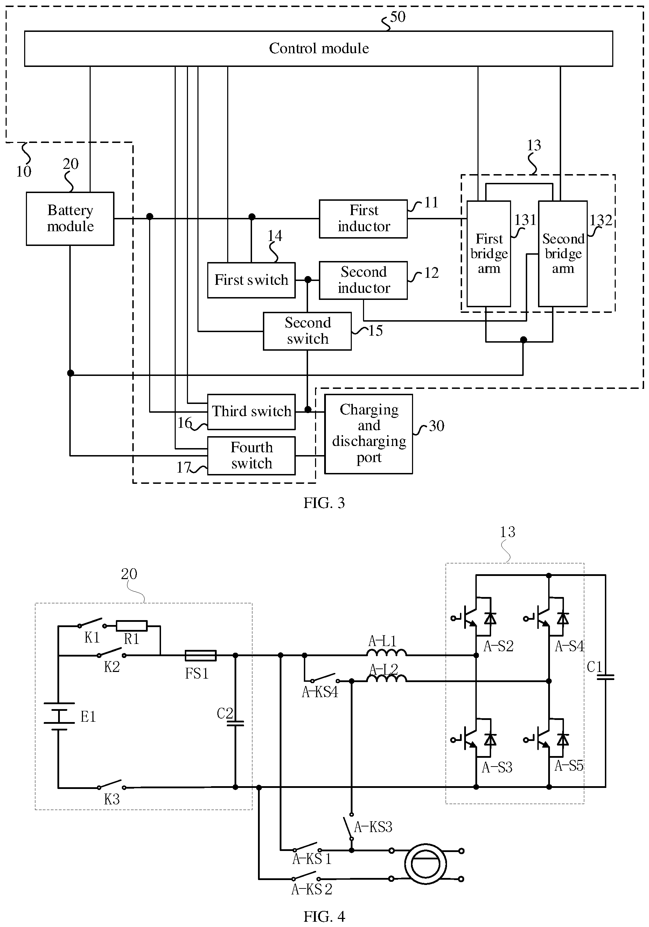

Further, as an implementation, as shown in FIG. 3, the energy conversion apparatus further includes a first switch 14.

The first switch 14 is connected between the first output end of the battery module 20 and the first end of the second inductor 12. The control module 50 is further connected to a control end of the first switch 14.

The first switch 14 is configured to connect the second inductor 12 to the battery module 20. When the first switch 14 is switched on, the battery module 20 charges the second inductor 12. After charging, the battery module 20 discharges with the second inductor 12 together, to implement boost discharging. That is, the first switch 14 is arranged, so that the second inductor 12 can be used as a backup inductor of the first inductor 11.

In this implementation, the first switch is added, so that the second inductor 12 backs up the first inductor 11, improving reliability of the circuit.

Further, as an implementation, as shown in FIG. 3, the energy conversion apparatus further includes a fourth switch 17.

The fourth switch 17 is connected between the second output end of the battery module 20 and the second end of the charging and discharging port 30. The control module 50 is further connected to a control end of the fourth switch 17.

The fourth switch 17 is arranged to cooperate with the third switch 16, so that the battery module 20 is controlled to discharge externally through the charging and discharging port 30.

Further, as an implementation, the battery module 20 includes:
a battery, a primary positive contactor, a precharge switch, a precharge resistor, and a fuse.

A first end of the primary positive contactor is connected to a positive electrode of the battery.

A first end of the precharge switch is connected to the positive electrode of the battery.

A first end of the precharge resistor is connected to a second end of the precharge switch.

A first end of the fuse is connected to a second end of the primary positive contactor and a second end of the precharge resistor.

The energy conversion apparatus further includes: a second capacitor.

A first end of the second capacitor is connected to a second end of the fuse, and a second end of the second capacitor is connected to a negative electrode of the battery. The first end of the second capacitor is respectively the first output end and the second output end of the battery module 20.

The precharge switch and a primary negative contactor are controlled to be switched on to cause the battery to charge the second capacitor through the precharge resistor and the fuse. Then the precharge switch is controlled to be switched off, and the primary positive contactor is controlled to be switched on, to cause the battery to charge the second capacitor.

In this implementation, the precharge switch and the precharge resistor are arranged to prevent the battery from directly charging the second capacitor, and then the primary positive contactor is switched on to cause the battery to charge the second capacitor, ensuring security of the battery module.

FIG. 4 is a circuit diagram of an example of an energy conversion apparatus according to an embodiment of the present disclosure. For convenience of describing the energy conversion apparatus, other electrical devices are omitted in the figure. The energy conversion apparatus includes a first inductor A-L1, a second inductor A-L2, a first two-way H-bridge, a first capacitor C1, a first switch A-KS4, a second switch A-KS3, a third switch A-KS1, and a fourth switch A-KS2. The battery module includes a battery E1, a precharge switch K1, a primary positive contactor K2, a primary negative contactor K3, a precharge resistor R1, a fuse FS1, and a second capacitor C2. A positive electrode of the battery E1 is connected to a first end of the precharge switch K1 and a first end of the primary positive contactor K2. A second end of the precharge switch K1 is connected to the first end of the primary positive contactor K2 and a first end of the fuse FS1. A second end of the fuse FS1 is connected to a first end of the second capacitor C2, a first end of the first switch A-KS4, a first end of the third switch A-KS1, and a first end of the first inductor A-L1. A second end of the primary negative contactor K3 is connected to a second end of the second capacitor C2 and a first end of the fourth switch A-KS2. A second end of the first switch A-KS4 is connected to a first end of the second inductor A-L2 and a first end of the second switch A-KS3. A second end of the third switch A-KS1 is connected to a second end of the second switch A-KS3 and a first end of a charging base. A second end of the fourth switch A-KS2 is connected to a second end of the charging base. The first two-way H-bridge includes a first bridge arm and a second bridge arm. The first bridge arm includes a first power switch A-S2 and a second power switch A-S3 that are connected in series. A first midpoint between the first power switch A-S2 and the second power switch A-S3 is connected to the first inductor A-L1. The second bridge arm includes a third power switch A-S4 and a fourth power switch A-S5. A second midpoint between the third power switch A-S4 and the fourth power switch A-S5 is connected to the second inductor A-L2. A first end of the first power switch A-S2 and a first end of the third power switch A-S4 are jointly connected to form a first bus terminal of the first two-way H-bridge. A second end of the second power switch A-S3 and a second end of the fourth power switch A-S5 are jointly connected to form a second bus terminal of the first two-way H-bridge, and the second bus terminal is connected to the second end of the primary negative contactor K3. A specific control method of the control module refers to the following embodiment.

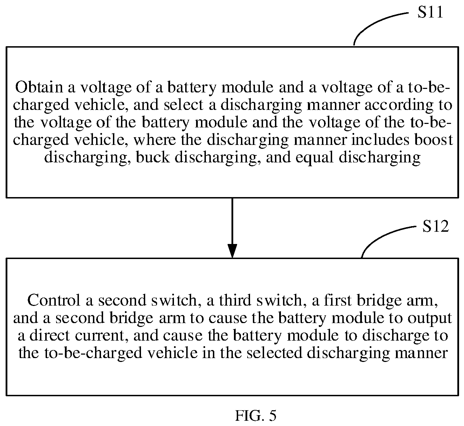

Embodiment 2 of the present disclosure provides an energy conversion apparatus provided based on Embodiment 1. As shown in FIG. 5, when a charging and discharging port of the energy conversion apparatus is connected to a to-be-charged vehicle, a discharging method includes:
Step S11. A voltage of a battery module and a voltage of the to-be-charged vehicle are obtained, and a discharging manner is selected according to the voltage of the battery module and the voltage of the to-be-charged vehicle, where the discharging manner includes boost discharging, buck discharging, and equal discharging.
Step S12. A second switch, a third switch, a first bridge arm, and a second bridge arm are controlled to cause the battery module to output a direct current, and cause the battery module to discharge to the to-be-charged vehicle in the selected discharging manner.

That a discharging manner is selected according to the voltage of the battery module and the voltage of the to-be-charged vehicle includes:
selecting a buck discharging manner when detecting that a difference between the voltage of the battery module and the voltage of the to-be-charged vehicle is greater than a first preset voltage value.

That a first switch, the second switch, the third switch, a fourth switch, the first bridge arm, and the second bridge arm are controlled to cause the battery module to output a direct current, and cause the battery module to discharge to the to-be-charged vehicle in the selected discharging manner includes:
controlling the first switch, the second switch, the third switch, the fourth switch, the first bridge arm, and the second bridge arm to cause a process of the battery module charging a second inductor and a process of the second inductor discharging to the to-be-charged vehicle to alternate, to buck a discharging voltage of the battery module, and then discharge to the to-be-charged vehicle.

That a discharging manner is selected according to the voltage of the battery module and the voltage of the to-be-charged vehicle includes:
selecting a boost discharging manner when detecting that the difference between the voltage of the battery module and the voltage of the to-be-charged vehicle is less than a second preset voltage value.

That a first switch, the second switch, the third switch, a fourth switch, the first bridge arm, and the second bridge arm are controlled to cause the battery module to output a direct current, and cause the battery module to discharge to the to-be-charged vehicle in the selected discharging manner includes:
controlling the first switch, the second switch, the third switch, the fourth switch, the first bridge arm, and the second bridge arm to cause a process of the battery module charging a first inductor and a process of the battery module and the first inductor discharging to the to-be-charged vehicle to alternate, to boost a discharging voltage of the battery module, and then discharge to the to-be-charged vehicle.

That a discharging manner is selected according to the voltage of the battery module and the voltage of the to-be-charged vehicle includes:
selecting an equal discharging manner when detecting that the difference between the voltage of the battery module and the voltage of the to-be-charged vehicle is not greater than the first preset voltage value and not less than the second preset voltage value.

That a second switch, a third switch, a first bridge arm, and a second bridge arm are controlled to cause the battery module to output a direct current, and cause the battery module to discharge to the to-be-charged vehicle in the selected discharging manner includes:
controlling the third switch to be in the on state and the second switch to be in the off state, to cause the battery module to discharge to the to-be-charged vehicle by using the third switch.

The discharging method is performed by a control module. When the control module detects that the to-be-charged vehicle is connected to the charging and discharging port, the control module compares the voltage of the battery module and the voltage of the to-be-charged vehicle, and selects, according to a comparison result, different discharging manners to discharge to the to-be-charged vehicle. When it is detected that a difference between the voltage of the battery module and the voltage of the to-be-charged vehicle is greater than a first preset voltage value, a direct current boost discharging manner may be used to discharge to the to-be-charged vehicle. Because the first inductor can store electric energy, a switch status of the first switch, the second switch, the third switch, and the fourth switch may be controlled, a power switch in the first bridge arm and the second bridge arm is controlled to be switched on, the first inductor is charged through the battery module, and the battery module and the first inductor are used to discharge to the to-be-charged vehicle. In a discharging process, because the first inductor also outputs electric energy, boost discharging is implemented. The first bridge arm and the second bridge arm are controlled to cause the charging process and the discharging process to alternate, which implements the boost discharging to the to-be-charged vehicle. When it is detected that the difference between the voltage of the battery module and the voltage of the to-be-charged vehicle is less than the second preset voltage value, a direct current buck discharging manner may be used to discharge to the to-be-charged vehicle. Because the second inductor can store electric energy, a switch status of the first switch, the second switch, the third switch, the fourth switch may be controlled, and the power switch in the first bridge arm and the second bridge arm may be controlled to be switched on, the second inductor is charged through the battery module, and the second inductor is used to discharge to the to-be-charged vehicle. In a discharging process, because only the second inductor also outputs electric energy, buck discharging is implemented. The first bridge arm and the second bridge arm are controlled to cause the charging process and the discharging process to alternate, which implements the buck discharging to the to-be-charged vehicle. When it is detected that the difference between the voltage of the battery module and the voltage of the to-be-charged vehicle is not less than the second preset voltage value, an equal discharging manner is selected, and a battery of the to-be-charged vehicle is directly charged through the battery module.

The technical solutions of the embodiments of the present disclosure is specifically described below through a specific circuit structure.

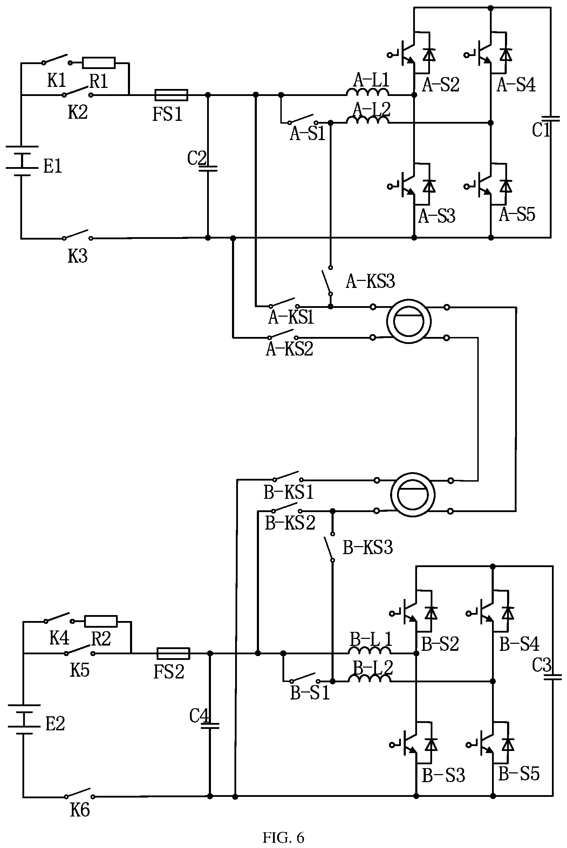

FIG. 6 is a circuit diagram of an example of vehicle-to-vehicle charging according to an embodiment of the present disclosure. A vehicle A includes a first battery module, a first energy apparatus, a first two-way H-bridge, and a first charging base. A first energy conversion apparatus includes a first inductor A-L1, a second inductor A-L2, the first two-way H-bridge, a first capacitor C1, a first switch A-KS4, a second switch A-KS3, a third switch A-KS1, and a fourth switch A-KS2. The first battery module includes a battery E1, a precharge switch K1, a primary positive contactor K2, a primary negative contactor K3, a precharge resistor R1, a fuse FS1, and a second capacitor C2. A positive electrode of the battery E1 is connected to a first end of the precharge switch K1 and a first end of the primary positive contactor K2. A second end of the precharge switch K1 is connected to the first end of the primary positive contactor K2 and a first end of the fuse FS1. A second end of the fuse FS1 is connected to a first end of the second capacitor C2, a first end of the first switch A-KS4, a first end of the third switch A-KS1, and a first end of the first inductor A-L1. A second end of the primary negative contactor K3 is connected to a second end of the second capacitor C2 and a first end of the fourth switch A-KS2. A second end of the first switch A-KS4 is connected to a first end of the second inductor A-L2 and a first end of the second switch A-KS3. A second end of the third switch A-KS1 is connected to a second end of the second switch A-KS3 and a first end of a charging base. A second end of the fourth switch A-KS2 is connected to a second end of the charging base. The first two-way H-bridge includes a first bridge arm and a second bridge arm. The first bridge arm includes a first power switch A-S2 and a second power switch A-S3 that are connected in series. A first midpoint between the first power switch A-S2 and the second power switch A-S3 is connected to the first inductor A-L1. The second bridge arm includes a third power switch A-S4 and a fourth power switch A-S5. A second midpoint between the third power switch A-S4 and the fourth power switch A-S5 is connected to the second inductor A-L2. A first end of the first power switch A-S2 and a first end of the third power switch A-S4 are jointly connected to form a first bus terminal of the first two-way H-bridge. A second end of the second power switch A-S3 and a second end of the fourth power switch A-S5 are jointly connected to form a second bus terminal of the first two-way H-bridge, and the second bus terminal is connected to the second end of the primary negative contactor K3.

A vehicle B includes a second battery module, a second energy apparatus, a second two-way H-bridge, and a second charging base. A second energy conversion apparatus includes a third inductor B-L1, a fourth inductor B-L2, the second two-way H-bridge, a first capacitor C3, a fifth switch B-S1, a sixth switch B-KS3, a seventh switch B-KS1, and an eighth switch B-KS2. The second battery module includes a battery E2, a precharge switch K4, a primary positive contactor K5, a primary negative contactor K6, a precharge resistor R2, a fuse FS2, and a fourth capacitor C4. A positive electrode of the battery E2 is connected to a first end of the precharge switch K4 and a first end of the primary positive contactor K5. A second end of the precharge switch K4 is connected to a first end of the precharge resistor R2. A second end of the precharge resistor R2 is connected to the first end of the primary positive contactor K5 and a first end of the fuse FS2. A second end of the fuse FS2 is connected to a first end of the fourth capacitor C4, a first end of the fifth switch B-S1, a first end of the eighth switch B-KS1, and a first end of the third inductor B-L1. A second end of the primary negative contactor K6 is connected to a second end of the fourth capacitor C4 and a first end of the seventh switch B-KS1. A second end of the fifth switch B-S1 is connected to a first end of the fourth inductor B-L2 and a first end of the sixth switch B-KS3. A second end of the sixth switch B-KS3 is connected to a second end of the eighth switch B-KS2 and a first end of the second charging base. A second end of the seventh switch B-KS1 is connected to a second end of the second charging base. The second two-way H-bridge includes a third bridge arm and a fourth bridge arm. The third bridge arm includes a fifth power switch B-S2 and a sixth power switch B-S3 that are connected in series. A first midpoint between the fifth power switch B-S2 and the sixth power switch B-S3 is connected to the third inductor B-L1. The fourth bridge arm includes a seventh power switch B-S4 and an eighth power switch B-S5. A second midpoint between the seventh power switch B-S4 and the eighth power switch B-S5 is connected to the fourth inductor B-L2. A first end of the fifth power switch B-S2 and a first end of the seventh power switch B-S4 are jointly connected to form a first bus terminal of the second first two-way H-bridge. A second end of the sixth power switch B-S3 and a second end of the eighth power switch B-S5 are jointly connected to form a second bus terminal of the second two-way H-bridge, and the second bus terminal is connected to the second end of the primary negative contactor K6. A third capacitor is further connected between the first bus terminal and the second bus terminal.

As shown in FIG. 6, after two vehicles are physically connected, the vehicles activate a V2V mode, prohibiting the vehicles from entering a drive mode, and establish CAN handshake communication. Information such as a battery voltage/SOC of a vehicle is sent through CAN, a vehicle with a lower SOC is automatically recognized as a charged vehicle, and a vehicle with a higher SOC is automatically recognized as a vehicle providing charging energy. The vehicle providing charging energy selects a charging mode according to a value of the battery voltage of the charged vehicle. For example, the vehicle A is the vehicle providing charging, and the vehicle B is the to-be-charged vehicle. When the battery voltage of the vehicle A is greater than the battery voltage of the vehicle B, the vehicles enter a buck discharging mode. When the battery voltage of the vehicle A is equal to the battery voltage of the vehicle B, the vehicles enter an equal discharging mode. When the battery voltage of the vehicle A is less than the battery voltage of the vehicle B, the vehicles enter a boost discharging mode.

### Working mode 1. The boost discharging mode:

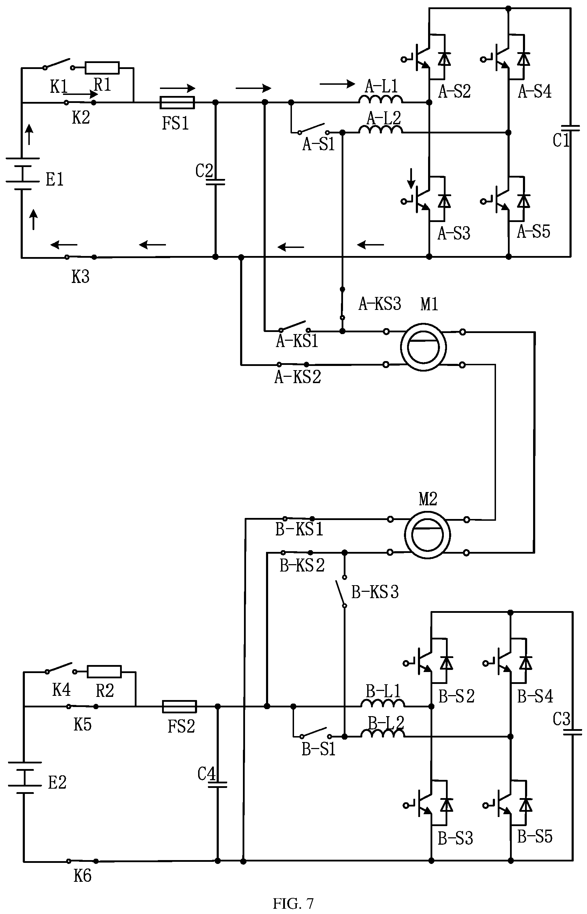

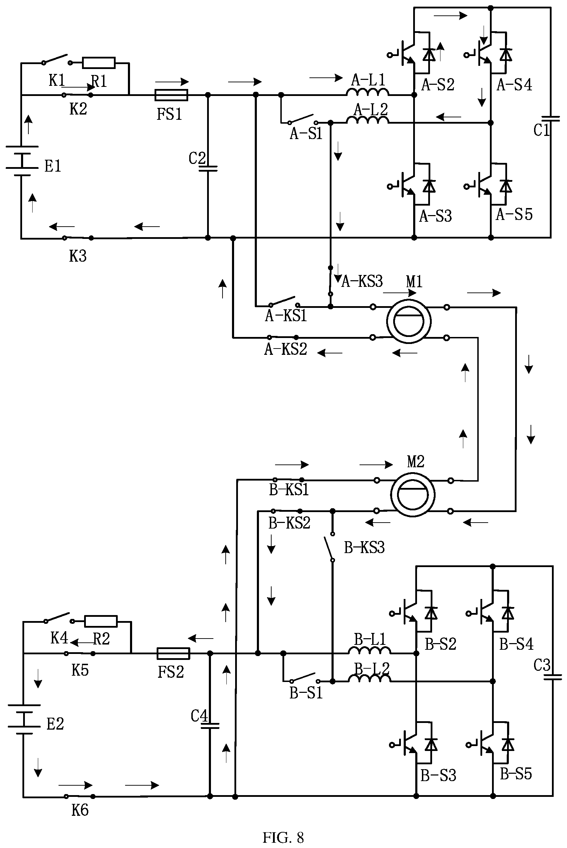

The vehicle A is a vehicle of a voltage platform V1, the vehicle B is a vehicle of a voltage platform V2, where V1<V2, and the vehicle A discharges to charge the vehicle B. As shown in FIG. 7, a control module of the vehicle A controls the primary positive contactor K2, the primary negative contactor K3, the first switch A-S1, the third switch A-KS1 to be switched off, controls the second switch A-KS3 and the fourth switch A-KS2 to be switched on, controls the bridge arms in the first power switch A-S2 and the fourth power switch A-S5 to be in the off state, the bridge arm in the third power switch A-S4 to be switched on, and the bridge arm in the second power switch A-S3 to be switched on and off alternately through PWM control signals. A control module in the vehicle B controls the primary positive contactor K5, the primary negative contactor K6, the seventh switch B-KS1, and the eighth switch B-KS2 to be switched on, and other switches and power switches are both switched off. When the bridge arm in the second power switch A-S3 is controlled to be in the on state, the battery E1, the primary positive contactor K2, the fuse FS1, the first inductor A-L1, the second power switch A-S3, and the primary negative contactor K3 are configured to form a first energy storing circuit. In this case, the battery E1 stores energy in the first inductor A-L1. As shown in FIG. 8, when the bridge arm in the second power switch A-S3 is in the off state, the battery E1, the primary positive contactor K2, the fuse FS1, the first inductor A-L1, the first power switch A-S2, the third power switch A-S4, the second inductor A-L2, the second switch A-KS3, a charging base M1, a charging base M2, the eighth switch B-KS2, the fuse FS2, the primary positive contactor K5, the battery E2, the primary negative contactor K6, the seventh switch B-KS1, the charging base M2, the charging base M1, the fourth switch A-KS2, and the primary negative contactor K3 are configured to form a first discharging circuit. The battery E1 and the first inductor A-L1 perform boost discharging on the battery E2 at the same time.

In this working mode, the second inductor A-L2, as an ordinary inductor, does not store energy, and the first inductor A-L1, as an energy storing inductor, stores energy. The bridge arm in the first power switch A-S2 is switched off and performs flow of energy through a flyback diode. Energy storage and release of the first inductor A-L1 is implemented through switching control of the second power switch A-S3, and a high battery voltage of the vehicle A is boosted to a voltage suitable for charging the vehicle B.

### Working mode 2. An equal charging mode:

The vehicle A and the vehicle B are both vehicles of a voltage platform V, and the vehicle A discharges to charge the vehicle B. When the voltages of the two vehicles are the same, vehicle-to-vehicle charging and discharging can be performed without voltage conversion. However, a direct connection between two battery packs is extremely risky. Therefore, the voltage of the vehicle A is boosted for charging the vehicle B. In this way, a control method of this charging mode is the same as that of the boost discharging mode, which may refer to the working mode 1.

### Working mode 3. The buck discharging mode:

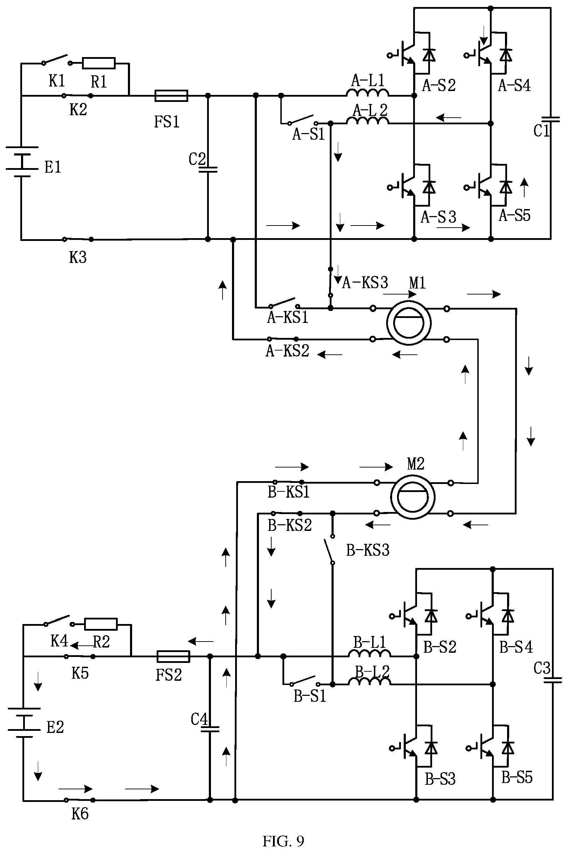

As shown in FIG. 6, the vehicle A is a vehicle of a voltage platform V1, and the vehicle B is a vehicle of a voltage platform V2, where V1>V2, and the vehicle A discharges to charge the vehicle B. The vehicle A is connected to the vehicle B for charging through a V2V high-voltage connecting cable. As shown in FIG. 8, in the vehicle A, the control module controls the first switch A-S1 and the third switch A-KS1 to be switched off, controls the primary positive contactor K2, the primary negative contactor K3, the second switch A-KS3, and the fourth switch A-KS2 to be switched on, controls the bridge arms in the first power switch A-S2, the second power switch A-S3, and the fourth power switch A-S5 to be in the off state, and the bridge arm in the third power switch A-S4 to be switched on and off alternately through PWM control signals. A control module in the vehicle B controls the primary positive contactor K5, the primary negative contactor K6, the seventh switch B-KS1, and the eighth switch B-KS2 to be switched on, and other switches and power switches are both switched off. As shown in FIG. 9, when the bridge arm in the third power switch A-S4 is controlled to be in the on state, and when the bridge arm in the second power switch A-S3 is in the on state, the battery E1, the primary positive contactor K2, the fuse FS1, the first inductor A-L1, the first power switch A-S2, the third power switch A-S4, the second inductor A-L2, the second switch A-KS3, a charging base M1, a charging base M2, the eighth switch B-KS2, the fuse FS2, the primary positive contactor K5, the battery E2, the primary negative contactor K6, the seventh switch B-KS1, the charging base M2, the charging base M1, the fourth switch A-KS2, and the primary negative contactor K3 are configured to form a second energy storing circuit. The battery E1 charges the second inductor A-L2. When the bridge arm in the third power switch A-S4 is in the off state, the second inductor A-L2, the second switch A-KS3, the charging base M1, the charging base M2, the eighth switch B-KS2, the fuse FS2, the primary positive contactor K5, the battery E2, the primary negative contactor K6, the seventh switch B-KS1, the charging base M2, the charging base M1, and the fourth power switch A-S5 are configured to form a second discharging circuit. The second inductor A-L2 discharges to the battery E2.

In this working mode, the first inductor A-L1, as an ordinary inductor, does not store energy, the first power switch A-S2 is switched off, and performs flow of energy through a flyback diode. Energy storage and release of the second inductor A-S2 is implemented through switching control of the third power switch A-S4, and a high voltage V1 of the battery E1 is bucked to a voltage V2 suitable for charging the vehicle B.

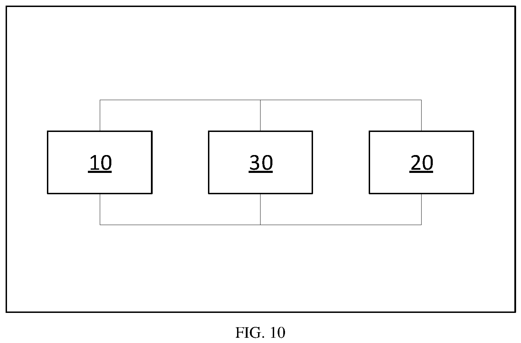

As shown in FIG. 10, another embodiment of the present disclosure provides a vehicle. The vehicle further includes the energy conversion apparatus, the battery module, and the charging and discharging port according to Embodiment 1. One end of the battery module and one end of the energy conversion apparatus are jointly connected to one end of the charging and discharging port, and an other end of the battery module and an other end of the energy conversion apparatus are jointly connected to an other end of the charging and discharging port.

The above embodiments are merely used to describe the technical solutions of the present disclosure, but not to limit the technical solutions. Although the present disclosure is described in detail with reference to the foregoing embodiments, a person of ordinary skill in the art should understand that, modifications may still be made to the technical solutions described in the foregoing embodiments, or equivalent replacements may be made to the part of the technical features; and these modifications or replacements do not detach the nature of the corresponding technical solutions from the spirit and the scope of the technical solutions of the various embodiments of the present disclosure, and should be included in the scope of the protection of the present disclosure.

## Claims

1. An energy conversion apparatus (10), comprising:
a first inductor (11), a first end of the first inductor (11) being connected to a first output end of a battery module (20);
a second inductor (12), a first end of the second inductor (12) being connected to the first end of the first inductor (11);
a second switch (15), connected between the first end of the second inductor (12) and a first end of a charging and discharging port (30);
a first two-way H-bridge (13), one end of the first two-way H-bridge (13) being connected to a second output end of the battery module (20) and a second end of the charging and discharging port (30), the first two-way H-bridge (13) comprising a first bridge arm (131) and a second bridge arm (132) that are connected in parallel, a second end of the first inductor (11) being connected to the first bridge arm (131), and a second end of the second inductor (12) being connected to the second bridge arm (132); and
a third switch (16), connected between the first end of the first inductor (11) and the first end of the charging and discharging port (30).

2. The energy conversion apparatus (10) according to claim 1, further comprising a control module (50), the control module (50) being connected to the battery module (20), a control end of the first bridge arm (131), a control end of the second bridge arm (132), a control end of the second switch (15), and a control end of the third switch (16), and when the charging and discharging port (30) is connected to a to-be-charged vehicle, the control module (50) being configured to:
obtain a voltage of the battery module (20) and a voltage of the to-be-charged vehicle, and select a discharging manner according to the voltage of the battery module (20) and the voltage of the to-be-charged vehicle, wherein the discharging manner comprises boost discharging, buck discharging, and equal discharging; and
control the second switch (15), the third switch (16), the first bridge arm (131), and the second bridge arm (132) to cause the battery module (20) to output a direct current, and cause the battery module (20) to discharge to the to-be-charged vehicle in the selected discharging manner.

3. The energy conversion apparatus (10) according to claim 2, wherein the first bridge arm (131) comprises a first power switch and a second power switch that are connected in series, the second end of the first inductor (11) being connected to a second end of the first power switch and a first end of the second power switch;
the second bridge arm (132) comprises a third power switch and a fourth power switch that are connected in series, the second end of the second inductor (12) being connected to a second end of the third power switch and a first end of the fourth power switch;
a first end of the first power switch and a first end of the third power switch are jointly connected to form a first bus terminal of the first two-way H-bridge (13); and a second end of the second power switch and a second end of the fourth power switch are jointly connected to form a second bus terminal of the first two-way H-bridge (13), and the second bus terminal is connected to the second output end of the battery module (20) and the second end of the charging and discharging port (30).

4. The energy conversion apparatus (10) according to claim 3, wherein when the control module (50) performs boost discharging, the third switch (16) is in an off state, the second switch (15) is in an on state, the battery module (20), the first inductor (11), the second power switch, and the to-be-charged vehicle are configured to form a first energy storing circuit, and the battery module (20), the first inductor (11), the second power switch, the third power switch, the second inductor (12), the second switch (15), and the to-be-charged vehicle are configured to form a first discharging circuit.

5. The energy conversion apparatus (10) according to claim 3 or 4, wherein when the control module (50) performs buck discharging, the third switch (16) is in the off state, the second switch (15) is in the on state, the battery module (20), the first inductor (11), the second power switch, the third power switch, the second inductor (12), the second switch (15), and the to-be-charged vehicle are configured to form a second energy storing circuit, and the second inductor (12), the second switch (15), the to-be-charged vehicle, and the fourth power switch are configured to form a second discharging circuit.

6. The energy conversion apparatus (10) according to any one of claims 2 to 5, wherein when the control module (50) performs equal discharging, the third switch (16) is in the on state, the second switch (15) is in the off state, and the battery module (20), the third switch (16), and the to-be-charged vehicle are configured to form a third discharging circuit.

7. The energy conversion apparatus (10) according to any one of claims 3 to 5, further comprising:
a first capacitor, connected between the first bus terminal and the second bus terminal.

8. The energy conversion apparatus (10) according to any one of claims 2 to 7, further comprising:
a first switch (14), connected between a first output end of the battery module (20) and the first end of the second inductor (12), the control module (50) being further connected to a control end of the first switch (14).

9. The energy conversion apparatus (10) according to any one of claims 2 to 8, further comprising:
a fourth switch (17), connected between the second output end of the battery module (20) and the second end of the charging and discharging port (30), the control module (50) being further connected to a control end of the fourth switch (17).

10. The energy conversion apparatus (10) according to claim 7, wherein the first two-way H-bridge (13) is connected to a motor controller, and the motor controller is connected to a motor;
when the energy conversion apparatus (10) is in a drive state, the battery module (20), the first inductor (11), the second inductor (12), the first two-way H-bridge (13), the motor controller, and the motor are configured as a part of a drive circuit; and
when the energy conversion apparatus (10) is in a discharging state, the battery module (20), the first inductor (11), the second inductor (12), the first two-way H-bridge (13), the second switch (15), the third switch (16), and the to-be-charged vehicle are configured as a part of a discharging circuit,
the first inductor (11), the second inductor (12), and the first two-way H-bridge (13) being multiplexed in the drive circuit and the discharging circuit.

11. The energy conversion apparatus (10) according to any one of claims 1 to 10, wherein the battery module (20) comprises:
a battery;
a primary positive contactor, a first end of the primary positive contactor being connected to a positive electrode of the battery;
a precharge switch, a first end of the precharge switch being connected to the positive electrode of the battery;
a precharge resistor, a first end of the precharge resistor being connected to a second end of the precharge switch; and
a fuse, a first end of the fuse being connected to a second end of the primary positive contactor and a second end of the precharge resistor.

12. The energy conversion apparatus (10) according to any one of claims 1 to 11, further comprising:
a second capacitor, connected between the first output end and the second output end of the battery module (20).

13. A discharging method of an energy conversion apparatus (10), based on the energy conversion apparatus (10) according to claim 1, when the charging and discharging port (30) of the energy conversion apparatus (10) is connected to a to-be-charged vehicle, the discharging method comprising:
obtaining a voltage of the battery module (20) and a voltage of the to-be-charged vehicle, and selecting a discharging manner according to the voltage of the battery module (20) and the voltage of the to-be-charged vehicle, wherein the discharging manner comprises boost discharging, buck discharging, and equal discharging; and
controlling the second switch (15), the third switch (16), the first bridge arm (131), and the second bridge arm (132) to cause the battery module (20) to output a direct current, and cause the battery module (20) to discharge to the to-be-charged vehicle in the selected discharging manner.

14. The discharging method according to claim 13, wherein the selecting a discharging manner according to the voltage of the battery module (20) and the voltage of the to-be-charged vehicle comprises:
selecting a buck discharging manner when detecting that a difference between the voltage of the battery module (20) and the voltage of the to-be-charged vehicle is greater than a first preset voltage value; and
the controlling the second switch (15), the third switch (16), the first bridge arm (131), and the second bridge arm (132) to cause the battery module (20) to output a direct current, and cause the battery module (20) to discharge to the to-be-charged vehicle in the selected discharging manner comprises:
controlling the second switch (15), the third switch (16), the first bridge arm (131), and the second bridge arm (132) to cause a process of the battery module (20) charging the second inductor (12) and a process of the second inductor (12) discharging to the to-be-charged vehicle to alternate, to buck a discharging voltage of the battery module (20) and then discharge to the to-be-charged vehicle.

15. The discharging method according to claim 13 or 14, wherein the selecting a discharging manner according to the voltage of the battery module (20) and the voltage of the to-be-charged vehicle comprises:
selecting a boost discharging manner when detecting that the difference between the voltage of the battery module (20) and the voltage of the to-be-charged vehicle is less than a second preset voltage value; and
the controlling the second switch (15), the third switch (16), the first bridge arm (131), and the second bridge arm (132) to cause the battery module (20) to output a direct current, and cause the battery module (20) to discharge to the to-be-charged vehicle in the selected discharging manner comprises:
controlling the second switch (15), the third switch (16), the first bridge arm (131), and the second bridge arm (132) to cause a process of the battery module (20) charging the first inductor (11) and a process of the battery module (20) and the first inductor (11) discharging to the to-be-charged vehicle to alternate, to boost a discharging voltage of the battery module (20) and then discharge to the to-be-charged vehicle.

16. The discharging method according to any one of claims 13 to 15, wherein the selecting a discharging manner according to the voltage of the battery module (20) and the voltage of the to-be-charged vehicle comprises:
selecting an equal discharging manner when detecting that the difference between the voltage of the battery module (20) and the voltage of the to-be-charged vehicle is not greater than the first preset voltage value and not less than the second preset voltage value; and
the controlling the second switch (15), the third switch (16), the first bridge arm (131), and the second bridge arm (132) to cause the battery module (20) to output a direct current, and cause the battery module (20) to discharge to the to-be-charged vehicle in the selected discharging manner comprises:
controlling the third switch (16) to be in the on state and the second switch (15) to be in the off state, to cause the battery module (20) to discharge to the to-be-charged vehicle by using the third switch (16).

17. A vehicle, further comprising the energy conversion apparatus (10), the battery module (20), and the charging and discharging port (30) according to any one of claims 1 to 13, one end of the battery module (20) and one end of the energy conversion apparatus (10) being jointly connected to one end of the charging and discharging port (30), and an other end of the battery module (20) and an other end of the energy conversion apparatus (10) being jointly connected to an other end of the charging and discharging port (30).
